# EUROPEAN PATENT SPECIFICATION

(11) **EP 2 987 959 B1**
(45) Date of publication and mention of the grant of the patent: **15.03.2017**
(21) Application number: 15181652.7
(22) Date of filing: 20.08.2015
(51) Int. Cl.: F01D 11/00, F01D 11/24, F01D 5/22

(54) **SEAL WITH COOLING FEATURE**
DICHTUNG MIT KÜHLFUNKTION
JOINT D'ÉTANCHÉITÉ AVEC FONCTION DE REFROIDISSEMENT

(30) Priority: 22.08.2014 US 201462040545 P; 07.08.2015 US 201514820686
(43) Date of publication of application: 24.02.2016
(73) Proprietor: Rolls-Royce Corporation, Indianapolis, Indiana 46225 (US)
(72) Inventor: Webb, Michael D., Indianapolis, IN Indiana 46202 (US); Barker, Brett J., Indianapolis, IN Indiana 46234 (US); Weaver, John A., Indianapolis, IN Indiana 46231 (US)
(74) Representative: Gille Hrabal

(56) References cited:
- EP-A2- 1 033 477
- EP-A2- 1 162 346
- DE-A1- 10 306 915
- US-A- 4 767 260

## Description

### CROSS REFERENCE TO RELATED APPLICATIONS

This application claims priority to and the benefit of U.S. Provisional Patent Application Number 62/040,545, filed 22 August 2014.

### FIELD OF THE DISCLOSURE

The present disclosure relates generally to seals, and more specifically to seals for use in gas turbine engines.

### BACKGROUND

Gas turbine engines are used to power aircraft, watercraft, power generators, and the like. Gas turbine engines typically include a compressor, a combustor, and a turbine. The compressor compresses air drawn into the engine and delivers high-pressure air to the combustor. In the combustor, fuel is mixed with the high-pressure air and is ignited. Products of the combustion reaction in the combustor are directed into the turbine where work is extracted to drive the compressor and, sometimes, an output shaft. Left-over products of the combustion are exhausted out of the turbine and may provide thrust in some applications.

Compressors and turbines typically include seals to control the flow between fluid cavities formed in the engine. As an example, some turbines include rotating wheel assemblies and static shrouds arranged around the rotating wheel assemblies. Each static shroud may include a plurality of segments arranged around an axis of the turbine to form a ring around the rotating wheel assembly. Seals may be positioned between neighboring segments to block fluid from moving radially through gaps formed between each of the segments. DE103 06 915 A1 discloses a seal for use between segments of gas turbine shrouds comprising a strip which fits into grooves in the edges of adjacent segments, wherein apertures for the passage of gas are provided, which are arranged on either side of its longitudinal axis in a pattern designed so that when the strip shifts sideways their free cross-section remains constant.

### SUMMARY

The present invention is defined by the features of claim 1.

In some embodiments, the flow guide may include a guide sheet and a first cooling passage formed in the guide sheet. The first cooling passage may be arranged to extend through the guide sheet. The guide sheet may include an outer surface, an inner surface radially spaced apart from the outer surface, and a passage sidewall extending between and interconnecting the outer and inner surfaces to define the first cooling passage.

According to the invention, the passage sidewall and the inner surface defines an angle α therebetween and the angle α is less than 90 degrees.

In some embodiments, the outer surface may be formed to include an inlet aperture arranged to open into the first cooling passage. The inner surface may be formed to include an outlet aperture arranged to open into the first cooling passage. The inlet aperture may have a circular shape when viewed from a position radially outward of the outer surface looking toward a central axis of the shroud ring.

In some embodiments, the strip seal may have a longitudinal axis located about midway between the first and second strips. The inlet aperture may include an inlet center point and the inlet center point may lie on the longitudinal axis.

In some embodiments, the outlet aperture may have a circular shape when viewed from a position radially inward of the inner surface looking toward the central axis. The outlet aperture may include an outlet center point and the outlet center point is spaced apart from the longitudinal axis.

In some embodiments, the flow guide may include a guide sheet and a first cooling passage formed in the guide sheet, the first cooling passage is arranged to extend through the guide sheet. The guide sheet may include a forward sidewall and a rear sidewall spaced apart from the forward sidewall. The first shroud segment, the second shroud segment, the forward sidewall, and the rear sidewall may cooperate to define the first cooling passage.

According to another aspect of the present disclosure, a strip seal for use in a shroud ring of a turbine may comprise a first strip, a second strip, and a flow-control band. The second strip may be spaced apart from the first strip. The flow-control band may be arranged to extend between and interconnect the first and second strips. The flow-control band may include a flow blocker arranged to block a first flow of fluid through the strip seal and a flow guide arranged to allow a second flow of fluid to pass through the strip seal away from the first strip toward the second strip.

In some embodiments, the flow guide may include a guide sheet and a first cooling passage formed in the guide sheet. The guide sheet may include an outer surface and an inner surface spaced apart from the outer surface. The outer surface may be formed to include an inlet aperture arranged to open into the first cooling passage. The inner surface may be formed to include an outlet aperture arranged to open into the first cooling passage. The inlet aperture may have a circular shape.

In some embodiments, the strip seal may have a longitudinal axis located about midway between the first and second strips. The inlet aperture may include an inlet center point and the inlet center point may lie on the longitudinal axis.

In some embodiments, the strip seal may have a longitudinal axis located about midway between the first and second strips. The inlet aperture may include an inlet center point and the inlet center point may be spaced apart from the longitudinal axis.

In some embodiments, the strip seal may have a longitudinal axis located about midway between the first and second strips. The entire inlet aperture may be spaced apart from the longitudinal axis.

In some embodiments, the outlet aperture may include an outlet center point. The outlet center point may be spaced apart from the longitudinal axis.

In some embodiments, the outlet aperture may be spaced apart axially from the inlet aperture relative to the longitudinal axis.

In some embodiments, the outlet aperture may include an outlet center point. The outlet center point may be spaced apart from the longitudinal axis.

In some embodiments, the entire outlet aperture may be spaced apart from the longitudinal axis.

In some embodiments, the flow guide may include a guide sheet and a first cooling passage formed in the guide sheet. The guide sheet may include an inlet aperture that opens into the cooling passage. The inlet aperture may be oval shaped.

In some embodiments, the flow guide may include a guide sheet and a first cooling passage formed in the guide sheet. The guide sheet may include an inlet aperture that opens into the cooling passage. The inlet aperture may be rectangle shaped.

In some embodiments, the second flow of fluid may include a first portion of air and a second portion of air. The flow guide may include a guide sheet formed to include a first cooling passage and a second cooling passage. The first cooling passage may be arranged to direct the first portion of air through the seal strip toward the second strip. The second cooling passage may be spaced apart from the first cooling passage and arranged to direct the second portion of air through the strip seal toward the first strip.

In some embodiments, the guide sheet may include an outer surface formed to include a second inlet aperture that opens into the second cooling passage and an inner surface formed to include a second outlet aperture that opens into the second cooling passage. The second inlet aperture may have a circular shape.

In some embodiments, the strip seal may have a longitudinal axis located about midway between the first and second strips. The outer surface may be formed to further include a first inlet aperture that opens into the first cooling passage. The first inlet aperture may be spaced apart axially from the second inlet aperture relative to the longitudinal axis.

In some embodiments, the strip seal may have a longitudinal axis located about midway between the first and second strips. The outer surface may be formed to further include a first inlet aperture that opens into the first cooling passage. The first inlet aperture may be spaced apart circumferentially from the second inlet aperture relative to the longitudinal axis.

According to another aspect of the present disclosure, a method of making a strip seal may comprise the steps of providing a strip of material including a first strip, a second strip, and a flow-control band extending between and interconnecting the first and second strips and forming a flow guide in the flow-control band. The flow guide may include a cooling passage. The cooling passage may be arranged to extend through the strip seal to direct cooling air away from the first strip and toward the second strip.

These and other features of the present disclosure will become more apparent from the following description of the illustrative embodiments.

### BRIEF DESCRIPTION OF THE DRAWINGS

Fig. 1 is a cutaway view of a gas turbine engine including a turbine for extracting work from hot high-pressure products to power a fan assembly and a compressor included in the engine and showing that the turbine includes a plurality of rotating wheel assemblies and a plurality of static shroud rings arranged around the rotating wheel assemblies to insulate the outer band from the hot high-pressure products and to provide a desired dimensional tolerance between the rotating wheel assembly and the shroud ring;
Fig. 2 is a cutaway view of a portion of the turbine included in the gas turbine engine of Fig. 1 showing that the portion of the turbine includes an outer band, one of the rotating wheel assemblies, and one of the associated static shroud rings positioned radially between the outer band and the rotating wheel assembly and further showing that the shroud ring includes a plurality of shroud segments arranged around a central axis of the engine and a plurality of strip seals positioned in a gap between each neighboring pair of shroud segments as suggested in Fig. 3;
Fig. 3 is a sectional view taken along line 3-3 of Fig. 2 showing a first shroud segment, a second shroud segment, and the strip seal located between the first and second shroud segments and suggesting that the strip seal includes a flow guide configured to direct cooling air through the strip seal toward an inner surface of the second shroud segment to cool the inner surface and minimize oxidation of the second shroud segment as hot high-pressure products move past the inner surface of the shroud ring;
Fig. 4 is an exploded perspective view of the portion of the shroud ring of Fig. 3 showing that the shroud ring includes the first shroud segment, the second shroud segment, and the strip seal arranged to lie in corresponding slots formed in the first and second shroud segments;
Fig. 5 is a side elevation view of the turbine of Fig. 1 showing that the turbine includes the outer band, the shroud ring, and the rotating wheel assembly and that the turbine assembly further includes a static vane assembly spaced apart axially forward from the rotating wheel assembly;
Fig. 6 is a cutaway view of the shroud ring similar to Fig. 3 showing that the strip seal extends between the first and second shroud segments to close the gap therebetween and the flow guide included in the strip seal includes a plurality of cooling passages to direct cooling air through the strip seal toward the second shroud segment;
Fig. 7 is a top plan view of the strip seal of Fig. 6 showing that the strip seal includes a flow blocker arranged to block a first flow of fluid through the gap and a flow guide arranged to allow a second flow of fluid through the gap and to direct the second flow toward the second shroud segment;
Fig. 8 is a top plan view of another the strip seal in accordance with the present disclosure showing that the strip seal includes a flow blocker arranged to block a first flow of fluid through the gap and a flow guide arranged to allow a second flow of fluid through the gap and direct the second flow toward the first and second shroud segments;
Fig. 9 is a perspective view of another strip seal in accordance with the present disclosure showing that the strip seal includes a flow blocker and a flow guide formed to include two circular cooling passages and two oval shaped cooling passages;
Fig. 10 is a perspective view of another strip seal in accordance with the present disclosure showing that the strip seal includes a first body and a second body spaced apart from the first body to form the flow guide therebetween; and
Fig. 11 is a perspective view of another strip seal in accordance with the present disclosure showing that the strip seal includes a flow blocker and a flow guide and the flow guide is formed to include a rectangular shaped cooling passage.

### DETAILED DESCRIPTION OF THE DRAWINGS

For the purposes of promoting an understanding of the principles of the disclosure, reference will now be made to a number of illustrative embodiments illustrated in the drawings and specific language will be used to describe the same.

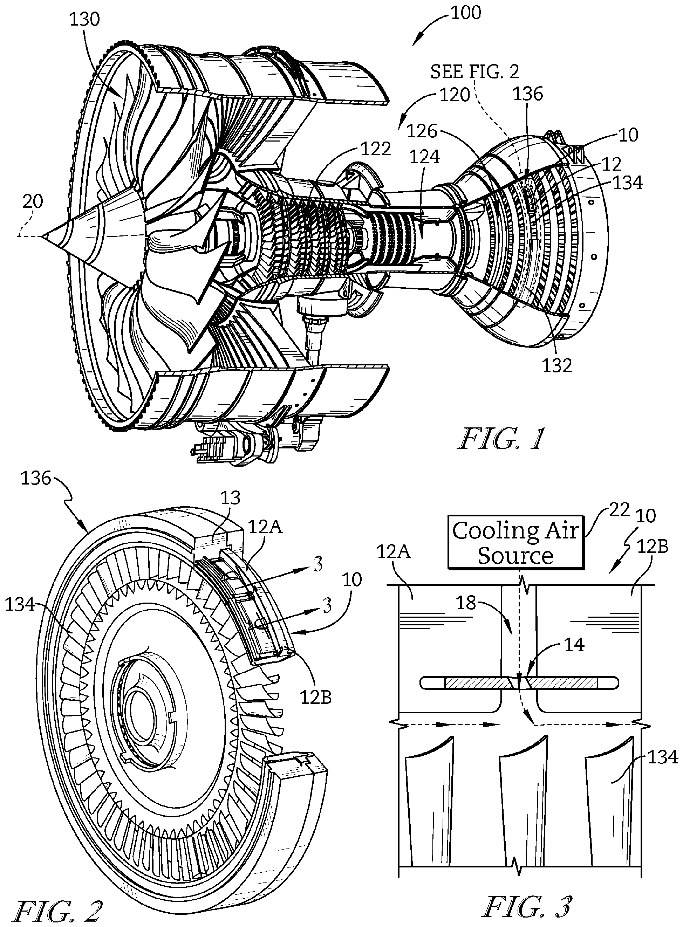

A strip seal 14 for use in a gas turbine engine 100 is arranged to control a flow of fluid between cavities formed in the engine 100 as suggested in Fig. 1. The illustrative gas turbine engine 100 includes an engine core 120 and a fan assembly 130 mounted illustratively to the engine core 120 to be driven by the engine core 120. The engine core 120 includes at least two cavities and a plurality of strip seals 14 arranged to control the flow of fluid moving between the two cavities. In the illustrative embodiment, the strip seals 14 are included in a shroud ring 10 arranged around rotating wheel assemblies 134. In other embodiments, the strip seals 14 are included in other components of the engine 100. As an example, the strip seals 14 may be included in static vanes of a high-pressure turbine included in the engine core 120.

The engine core 120 includes a compressor 122, a combustor 124, and a turbine 126 arranged along a central axis 20 of the engine 100. The compressor 122 is configured to compress and deliver air to the combustor 124. The combustor 124 is configured to mix fuel with the compressed air received from the compressor 122 and to ignite the fuel. The hot high-pressure products of the combustion reaction in the combustor 124 are directed into the turbine 126 where the turbine 126 extracts work to drive the compressor 122 and the fan assembly 130.

The turbine 126 includes an outer band 132, a plurality of rotating wheel assemblies 134 arranged along the central axis 20, and a plurality of associated shroud rings 10 arranged around the rotating wheel assemblies 134 as shown in Figs. 1 and 2. The outer band 132 and the shroud rings 10 extend around the central axis 20 of the engine 100 to define a case 136. The rotating wheel assemblies 134 are arranged to rotate as a result of the hot high-pressure products passing through the turbine 126. The rotating wheel assemblies 134 rotate within the case 136 to power the fan assembly 130 and the compressor 122.

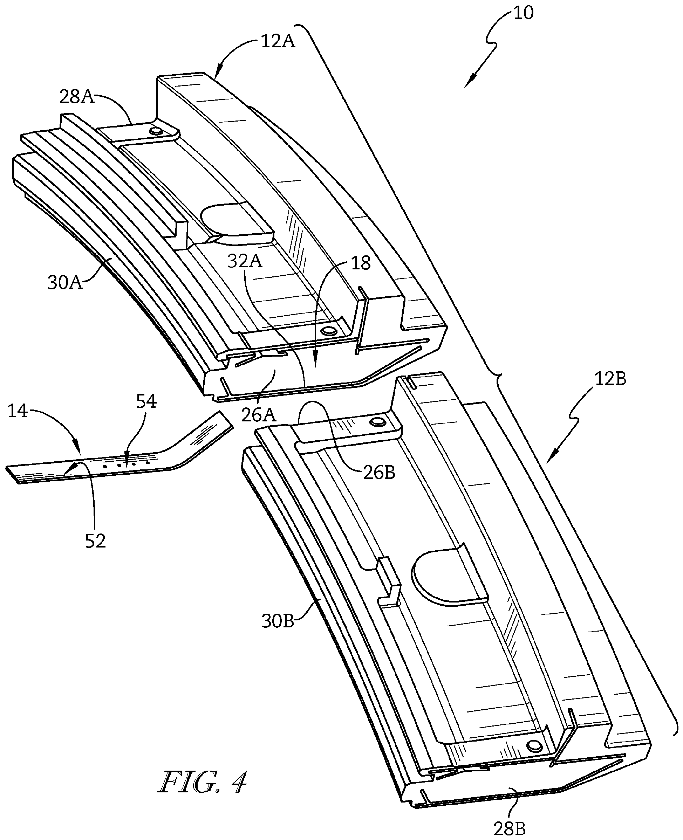

Each shroud ring 10 includes a plurality of shroud segments 12 and a plurality of strip seals 14 as shown in Figs. 3 and 4. The shroud segments 12 extend around the central axis 20 circumferentially to insulate the outer band 132 from the hot high-pressure products and to provide a desired dimensional tolerance between the blades of the rotating wheel assembly 134 and the outer band 132 as shown in Fig. 2. The strip seals 14 are positioned between neighboring shroud segments 12 to block a first flow of fluid from moving radially through gaps 18 formed between each of the shroud segments 12 and to direct a second flow of fluid through the gaps 18 as shown in Fig. 3.

Illustratively, the shroud segments 12 extend around the central axis 20 to form a full ring as shown in Fig. 2. Each shroud segment 12 is spaced apart from the adjacent shroud segment 12 to form the gap 18 therebetween as shown in Fig. 3. Each strip seal 14 is received in a neighboring pair of shroud segments 12 to block the first flow of fluid from passing through the gap 18 formed between the pair of shroud segments 12 and to allow the second flow of fluid to pass through the gap 18.

In the illustrative embodiment, the strip seal 14 extends between a first shroud segment 12A and a second shroud segment 12B that is spaced apart from the first shroud segment 12A as shown in Fig. 3. A source of cooling air 22 provides the first and second flows of fluid into the gap 18. The strip seal 14 blocks the first flow of fluid from passing through the strip seal 14. The strip seal 14 allows the second flow of fluid to pass through the strip seal 14 and directs the second flow of fluid toward the second shroud segment 12B.

The first ring segment 12A is spaced apart radially from the central axis 20 to form a portion of the shroud ring 10 as shown in Figs. 2-4. The first ring segment 12A includes an inner sidewall 26A, an outer sidewall 28A, a body 30A that extends between the inner and outer sidewalls 26A, 28A, and a first seal slot 32A as shown in Fig. 4.

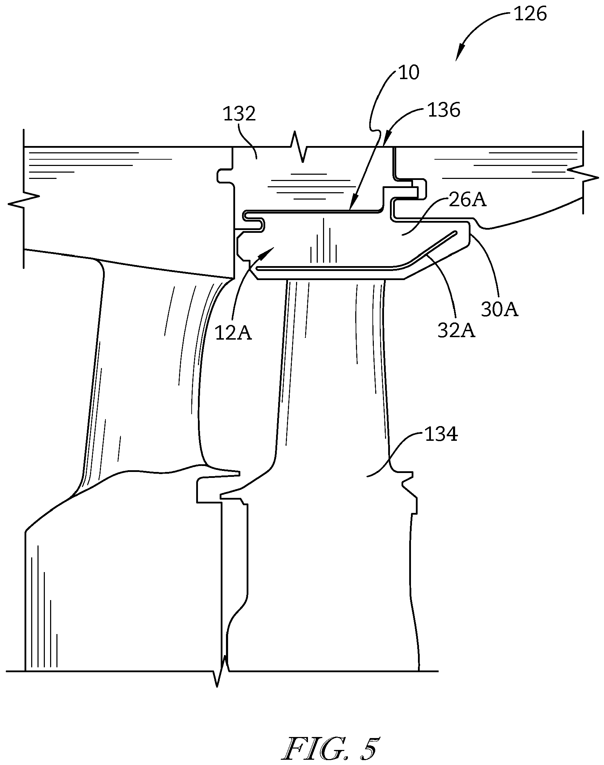

The inner sidewall 26A is spaced apart circumferentially from the second ring segment 12B to form the gap 18 therebetween as shown in Figs. 3 and 4. The outer sidewall 28A is spaced apart circumferentially from another shroud segment 12 (not shown). The body 30A provides a desired dimensional tolerance between the blades of the rotating wheel assembly 134 and the outer band 132 as suggested in Fig. 5. The body 30A insulates the outer band 132 from the hot high-pressure products being passed through the turbine 126. The first seal slot 32A opens into the inner sidewall 26A and extends into the body 30A circumferentially as shown in Fig. 4.

The first seal slot 32A receives a portion of the strip seal 14 as shown in Figs. 3 and 4. In the illustrative embodiment, the first seal slot 32A includes a radial outer surface 34A, a radial inner surface 36A spaced apart radially from the radial outer surface 34A, and an intermediate surface 38A that extends between and interconnects the radial outer and radial inner surfaces 34A, 36A.

The second ring segment 12B is substantially similar to the first ring segment 12A. As such, the second ring segment 12B is not discussed in detail.

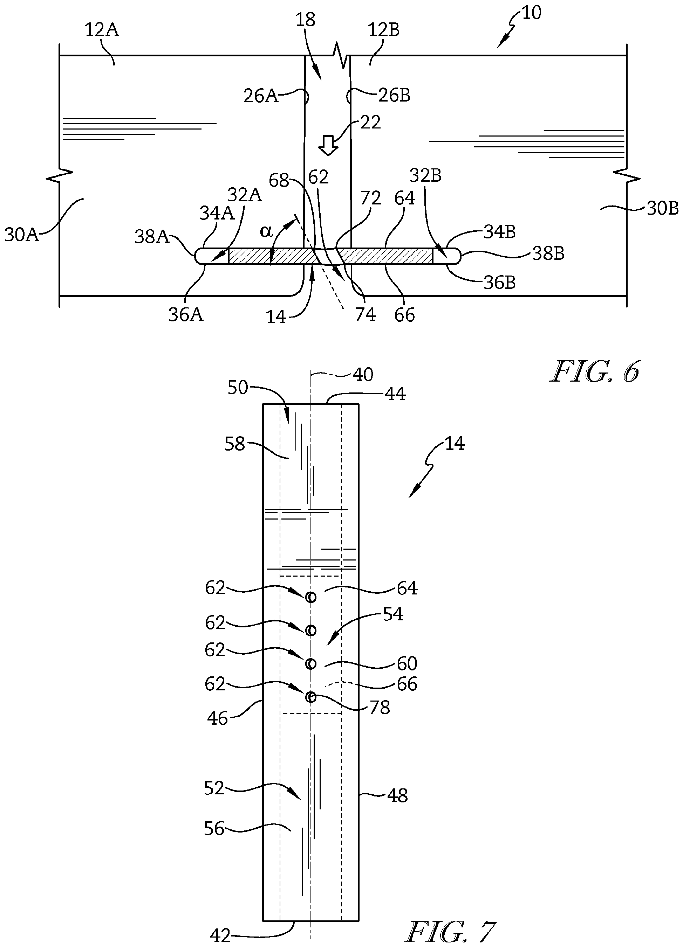

The strip seal 14 has a longitudinal axis 40, a forward end 42, and a rearward end 44 spaced apart axially from the forward end 42 along the longitudinal axis 40 as shown in Fig. 7. In some embodiments, the strip seal 14 is curved or includes a curved portion. In the illustrative embodiment, a first portion of the strip seal 14 extends axially relative to the central axis 20 and a second portion of the strip seal 14 extends axially and radially relative to the central axis 20 as shown in Fig. 4. In other embodiments, the strip seal 14 is about flat.

The strip seal 14 includes a first strip 46, a second strip 48, and a flow-control band 50 that extends between the first and second strips 46, 48 as shown in Fig. 7. The first strip 46 is received in the first seal slot 32A to couple the strip seal 14 to the first ring segment 12A. The second strip 48 is received in the second seal slot 32B to couple the strip seal 14 to the second ring segment 12B. The flow-control band 50 controls the flow of fluid provided into the gap 18 by the cooling source.

The first strip 46 is received in the first seal slot 32A formed in the first ring segment 12A as shown in Fig. 7. The first strip 46 is coupled to the first ring segment 12A and the flow-control band 50 to locate the flow-control band 50 in the gap 18 as shown in Fig. 6.

The first strip 46 extends along the longitudinal axis 40 between the forward end 42 and the rearward end 44 of the strip seal 14 as shown in Fig. 7. In the illustrative embodiment, the first strip 46 is continuous. The first strip46 illustratively engages the radial outer and inner surfaces 34A, 36A of the first seal slot 32A as suggested in Fig. 6. In some embodiments, the first strip 46 may engage only one of the radial outer and inner surfaces 34A, 36A of the first seal slot 32A and/or may intermittently engage with one or more of the radial outer and inner surfaces 34A, 36A of the first seal slot 32A along the length of the first strip 46. As a result, the circumferential movement of the first strip 46 into the first seal slot 32A is limited. The intermediate surface 38A is arranged to engage the first strip 46 to block circumferential movement of the strip seal 14.

The second strip 48 is received in the second seal slot 32B formed in the second ring segment 12B as shown in Fig. 6. The second strip 48 is coupled to the second ring segment 12B and the flow-control band 50 to locate the flow-control band 50 in the gap 18 as shown in Fig. 6.

The second strip 48 extends along the longitudinal axis 40 between the forward end 42 and the rearward end 44 of the strip seal 14 as shown in Fig. 7. In the illustrative embodiment, the second strip 48 is continuous. The second strip 48 illustratively engages the radial outer and inner surfaces 34B, 36B of the second seal slot 32B as suggested in Fig. 6. In some embodiments, the second strip 48 may engage only one of the radial outer and inner surfaces 34B, 36B of the second seal slot 32B and/or may intermittently engage with one or more of the radial outer and inner surfaces 34B, 36B of the second seal slot 32B along the length of the second strip 48. As a result, the circumferential movement of the second strip 48 into the second seal slot 32B is limited. The intermediate surface 38B is arranged to engage the second strip 48 to block circumferential movement of the strip seal 14.

The flow-control band 50 extends between the first and second strips 46, 48 to close the gap 18 as shown in Fig. 6. The flow-control band 50 includes a flow blocker 52 and a flow guide 54 as shown in Fig. 7. The flow blocker 52 blocks the first flow of fluid through the gap 18. The flow guide 54 allows the second flow of fluid through the gap 18 and directs the second flow of fluid away from the first shroud segment 12A toward the second shroud segment 12B.

The flow blocker 52 extends along the longitudinal axis 40 as shown in Fig. 7. The flow blocker 52 is continuous to block the first flow of fluid from passing through the strip seal 14. In the illustrative embodiment the flow blocker 52 includes a first leg 56 and a second leg 58 spaced apart from the first leg 56 to locate the flow guide 54 therebetween. The first leg 56 extends between and interconnects the first and second strips 46, 48 adjacent the forward end 42 of the strip seal 14. The second leg 58 extends between and interconnects the first and second strips 46, 48 adjacent the rearward end 44 of the strip seal 14.

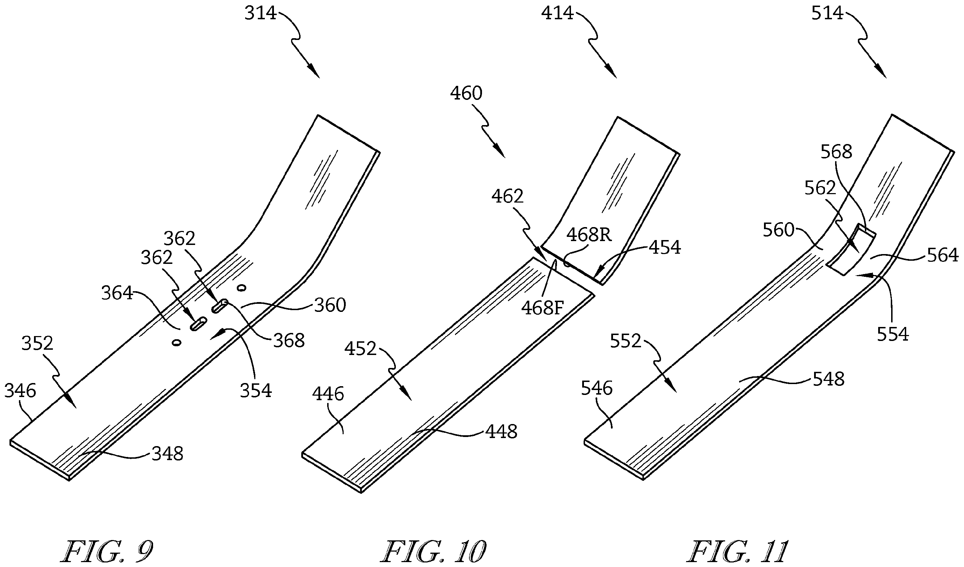

The flow guide 54 extends between and interconnects the first and second legs of the flow blocker 52 as shown in Fig. 7. The flow guide 54 is arranged to allow the second flow of fluid to pass through the gap 18.
Illustratively, the flow guide 54 is formed to include a guide sheet 60 and a plurality of cooling passages 62 that extend through the guide sheet 60. In other embodiments, the flow guide 54 includes a single cooling passage 62 as shown in Fig. 10 for example.

The guide sheet 60 includes an outer surface 64, an inner surface 66, and a plurality of passage sidewalls 68 as shown in Figs. 6 and 7. The inner surface 66 is spaced apart radially from the outer surface 64 relative to the central axis 20. Each of the plurality of passage sidewalls 68 extend between and interconnect the outer and inner surfaces 64, 66 to define the cooling passages 62. In the illustrative embodiment, each passage sidewall 68 is continuous.

According to the invention, the passage sidewall 68 and the inner surface 66 define an angle α therebetween. The angle α is less than 90 degrees. In the illustrative embodiment, the angle α is about 50 degrees. In other embodiments, the angle α is between about 0 degrees and less than 90 degrees. In some embodiments, the angle α is between about 30 degrees and about 70 degrees.

The outer surface 64 is formed to include a plurality of inlet apertures 72. Each inlet aperture 72 opens into a cooling passage 62. In the illustrative embodiment, the inlet aperture 72 has a circular cross section when viewed from a position radially outward of the outer surface 64 looking toward the central axis 20 as shown in Fig. 7. The circular inlet aperture 72 has an inlet center point 78 as shown in Fig. 7. In the illustrative embodiment, the inlet center point 78 lies on the longitudinal axis 40.

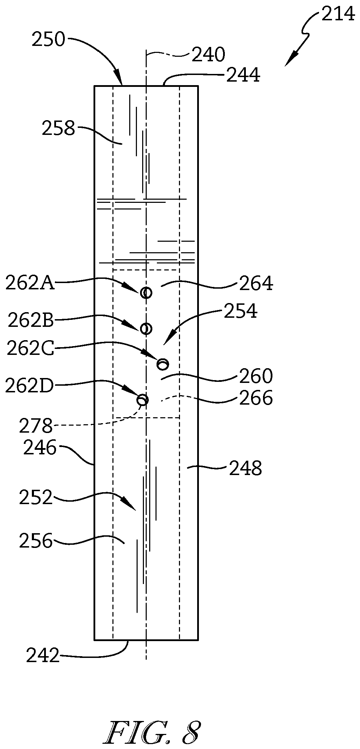

In other embodiments, the inlet center point is spaced apart from the longitudinal axis. For example, another embodiment of a strip seal 214 including an inlet aperture having an inlet center point spaced apart from the longitudinal axis 240 is shown in Fig. 8. The inlet center points may be spaced apart from the longitudinal axis 240 circumferentially, axially, or both circumferentially and axially. As shown in Fig. 8, in some embodiments, the entire inlet aperture is spaced apart from the longitudinal axis 240.

In other embodiments, the inlet aperture may have a plurality of shapes. For example, another embodiment of a strip seal 314 is shown in Fig. 9. The inlet aperture of the strip seal 314 has an oval cross section when viewed from a position radially outward from the outer surface relative to the central axis as shown in Fig. 9. In other embodiments, such as, for example, strip seals 414, 514 shown in Figs. 10 and 11, the inlet aperture has a rectangle cross section when viewed from a position radially outward from the outer surface looking toward the central axis.

In particular, the strip seal 414 includes a flow guide 454 as shown in Fig. 10. The flow guide 454 includes a guide sheet 460 and a cooling passage 462 formed in the guide sheet 460. The cooling passage 462 is arranged to extend through the guide sheet 460. The guide sheet 460 includes a forward sidewall 468F and a rear sidewall 468R spaced apart from the forward sidewall 468F. The first shroud segment 12A, the second shroud segment 12B, the forward sidewall 468F, and the rear sidewall 468R cooperate to define the cooling passage 462. As such, the inlet aperture has a rectangular cross section when viewed from a position radially outward from the outer surface looking toward the central axis.

The inner surface 66 is formed to include a plurality of outlet apertures 74 as shown in Fig. 6. Each outlet aperture 74 opens into a cooling passage 62. In the illustrative embodiment, the outlet aperture 74 has a circular cross section when viewed from a position radially inward of the inner surface 66 looking toward the central axis. The circular outlet aperture 74 has an outlet center point. In the illustrative embodiment, the outlet center point is spaced apart from the longitudinal axis 40. The outlet center point may be spaced apart from the longitudinal axis 40 circumferentially, axially, or both circumferentially and axially.

As shown in Fig. 8, the center points may be spaced apart from the longitudinal axis 240 circumferentially, axially, or both circumferentially and axially. In some embodiments, the entire outlet aperture is spaced apart from the longitudinal axis 240 as shown in Fig. 8.

In other embodiments, the outlet aperture may have a plurality of shapes. For example, the outlet aperture of the strip seal 314 has an oval cross section when viewed from a position radially inward of the inner surface looking toward the central axis as shown in Fig. 9. In other embodiments, such as strip seals 414, 514, the outlet aperture has a rectangle cross section when viewed from a position radially inward of the inner surface looking toward the central axis as shown in Figs. 10 and 11.

A method of making a strip seal 14 comprises a first step and a second step. In the first step, a strip of material including the first strip 46, the second strip 48, and a flow-control band 50 extending between and interconnecting the first and second strips 46, 48 is provided. In the second step, the flow guide 54 is formed in the flow-control band 50. The flow guide includes a cooling passage 62. The cooling passage 62 is arranged to extend through the strip seal 14 to direct cooling air away from the first strip 46 and toward the second strip 48.

A method of cooling an inner surface of a shroud ring 10 comprises a plurality of steps. In a first step, cooling air is provided into the gap 18. The cooling air includes the first flow of fluid and the second flow of fluid. In a second step, the first flow of fluid is blocked from passing through the strip seal 14. In a third step, the second flow of fluid is directed through the strip seal 14 toward the second shroud segment 12B.

Another illustrative strip seal 214 for use in the engine system 100 is shown in Fig. 8. The strip seal 214 is substantially similar to the strip seal 14 shown in Figs. 1-7 and described herein. Accordingly, similar reference numbers in the 200 series indicate features that are common between the strip seal 14 and the strip seal 214. The description of the strip seal 14 is hereby incorporated by reference to apply to the strip seal 214, except in instances when it conflicts with the specific description and drawings of the strip seal 214.

The strip seal 214 includes a plurality of cooling passages 262 as shown in Fig. 8. The cooling passages 262 include circular shaped inlet apertures 272 and outlet apertures 274.

The center point of the inlet aperture 272 of the first cooling passage 262A lies on the longitudinal axis 240. The center point of the outlet aperture 274 of the first cooling passage 262A is spaced apart from the longitudinal axis 240 to direct the cooling air toward the second shroud segment 12B.

The center point of the inlet aperture 272 of the second cooling passage 262B lies on the longitudinal axis 240. The center point of the outlet aperture 274 of the second cooling passage 262B is spaced apart circumferentially from the longitudinal axis 240 to direct the cooling air toward the first shroud segment 12A.

The entire inlet aperture 272 of the third cooling passage 262C is spaced apart from the longitudinal axis 240. The entire outlet aperture 274 of the third cooling passage 262C is spaced apart circumferentially from the longitudinal axis 240. The outlet aperture 274 is spaced apart axially from the inlet aperture 272 relative to the longitudinal axis 240.

The center point of the inlet aperture 272 of the fourth cooling passage 262D is spaced apart from the longitudinal axis 240. The center point of the outlet aperture 274 of the fourth cooling passage 262D is spaced apart circumferentially and axially from the longitudinal axis 240.

Another illustrative strip seal 314 for use in the engine system 100 is shown in Fig. 9. The strip seal 314 is substantially similar to the strip seal 14 shown in Figs. 1-7 and described herein. Accordingly, similar reference numbers in the 300 series indicate features that are common between the strip seal 14 and the strip seal 314. The description of the strip seal 14 is hereby incorporated by reference to apply to the strip seal 314, except in instances when it conflicts with the specific description and drawings of the strip seal 314.

The guide sheet 360 includes an outer surface 364 and an inner surface 366 as shown in Fig. 9. The outer surface 364 is formed to include an inlet aperture that opens into a cooling passage 362. The inlet aperture is oval shaped when viewed from a position radially outward from the outer surface 264 looking toward the central axis 20. The inner surface 366 is formed to include an outlet aperture and the outlet aperture is oval shaped when viewed from a position radially inward of inner surface 366 looking toward the central axis 20.

Another illustrative strip seal 414 for use in the engine system 100 is shown in Fig. 10. The strip seal 414 is substantially similar to the strip seal 14 shown in Figs. 1-7 and described herein. Accordingly, similar reference numbers in the 400 series indicate features that are common between the strip seal 14 and the strip seal 414. The description of the strip seal 14 is hereby incorporated by reference to apply to the strip seal 414, except in instances when it conflicts with the specific description and drawings of the strip seal 414.

The flow guide 454 includes the guide sheet 460 and a cooling passage 462 formed in the guide sheet 460 as shown in Fig. 10. The cooling passage 462 is arranged to extend through the guide sheet 460. The guide sheet 460 includes a forward sidewall 468F and a rear sidewall 468R spaced apart from the forward sidewall 468F. The first shroud segment 12A, the second shroud segment 12B, the forward sidewall 468F, and the rear sidewall 468R cooperate to define the cooling passage 462.

Another illustrative strip seal 514 for use in the engine system 100 is shown in Fig. 11. The strip seal 514 is substantially similar to the strip seal 14 shown in Figs. 1-7 and described herein. Accordingly, similar reference numbers in the 500 series indicate features that are common between the strip seal 14 and the strip seal 514. The description of the strip seal 14 is hereby incorporated by reference to apply to the strip seal 514, except in instances when it conflicts with the specific description and drawings of the strip seal 514.

The flow guide 554 includes the guide sheet 560 and a cooling passage 562 formed in the guide sheet 560 as shown in Fig. 11. The cooling passage 562 is arranged to extend through the guide sheet 560. The guide sheet 560 includes an outer surface 564, an inner surface 566, and a passage sidewall 568. The outer surface 564 is formed to include the inlet aperture 572 that opens into the cooling passage 562. The inlet aperture 572 is rectangular shaped when viewed from a position radially outward from the outer surface 564 looking toward the central axis 20. The inner surface 566 is formed to include the outlet aperture 574 that opens into the cooling passage 562. The outlet aperture 574 is rectangular shaped when viewed from a position radially inward of the inner surface 566 looking toward the central axis 20.

## Claims

1. A shroud ring (10) for a use in a turbine of a gas turbine engine (100), the shroud ring (10) comprising
a first shroud segment (12A),
a second shroud segment (12B) spaced apart circumferentially from the first shroud segment (12A) to form a gap (18) therebetween, and
a strip seal (14, 314, 414, 514) extending across the gap (18) and arranged to block a first flow of fluid through the gap (18) and including a flow guide (54, 454, 554) arranged to direct a second flow of fluid through the gap (18) away from the first shroud segment (12A) toward the second shroud segment (12B).

2. The shroud ring (10) of claim 1, wherein the strip seal (14, 314, 414, 514) includes a first strip (46) received in a first seal slot (32A) formed in the first shroud segment (12A), a second strip (48) received in a second seal slot (32B) formed in the second shroud segment (12B), and a flow-control band (50) that extends between and interconnects the first and second strips (46, 48).

3. The shroud ring (10) of claim 2, wherein the flow-control band (50) includes a flow blocker (52) arranged to block the first flow of fluid through the gap (18) and the flow guide (54, 454, 554) arranged to direct the second flow of fluid through the gap (18) and toward the second shroud segment (12B).

4. The shroud ring (10) of claim 3, wherein the flow guide (54, 454, 554) includes a guide sheet (60, 460, 560) and a first cooling passage (62) formed in the guide sheet (60, 460, 560), the first cooling passage (62) is arranged to extend through the guide sheet (60, 460, 560), the guide sheet (60, 460, 560) includes an outer surface (64, 264, 364, 564), an inner surface (66, 366, 566) radially spaced apart from the outer surface (64, 264, 364, 564), and a passage sidewall (68, 568) extending between and interconnecting the outer and inner surfaces (64, 264, 364, 564; 66, 366, 566) to define the first cooling passage (62).

5. The shroud ring (10) of claim 4, wherein the passage sidewall (68, 568) and the inner surface (66, 366, 566) define an angle α therebetween and the angle α is less than 90 degrees.

6. The shroud ring (10) of claim 4 or 5, wherein the outer surface (64, 264, 364, 564) is formed to include an inlet aperture (72, 272, 572) arranged to open into the first cooling passage (62), the inner surface (66, 366, 566) is formed to include an outlet aperture (74, 274, 574) arranged to open into the first cooling passage (62), and the inlet aperture (72, 272, 572) has a circular shape when viewed from a position radially outward of the outer surface (64, 264, 364, 564) looking toward a central axis (20) of the shroud ring (10).

7. The shroud ring (10) of claim 6, wherein the strip seal (14, 314, 414, 514) has a longitudinal axis (40, 240) located about midway between the first and second strips (46, 48), the inlet aperture (72, 272, 572) includes an inlet center point (78), and the inlet center point (78) lies on the longitudinal axis (40, 240).

8. The shroud ring (10) of claim 7, wherein the outlet aperture (74, 274, 574) has a circular shape when viewed from a position radially inward of the inner surface (66, 366, 566) looking toward the central axis (20), the outlet aperture (74, 274, 574) includes an outlet center point, and the outlet center point is spaced apart from the longitudinal axis (40, 240).

9. The shroud ring (10) of one of the claims 3 to 8, wherein the flow guide (54, 454, 554) includes a guide sheet (60, 460, 560) and a first cooling passage (62) formed in the guide sheet (60, 460, 560), the first cooling passage (62) is arranged to extend through the guide sheet (60, 460, 560), the guide sheet (60, 460, 560) includes a forward sidewall (468F) and a rear sidewall (468R) spaced apart from the forward sidewall (468F), and the first shroud segment (12A), the second shroud segment (12B), the forward sidewall (468F), and the rear sidewall (468R) cooperate to define the first cooling passage (62).

10. A strip seal (14, 314, 414, 514) for use in a shroud ring (10) of a turbine, the strip seal (14, 314, 414, 514) comprising
a first strip (46),
a second strip (48) spaced apart from the first strip (46), and
a flow-control band (50) that extends between and interconnects the first and second strips (46, 48), the flow-control band (50) including a flow blocker (52) arranged to block a first flow of fluid through the strip seal (14, 314, 414, 514) and a flow guide (54, 454, 554) arranged to allow a second flow of fluid to pass through the strip seal (14, 314, 414, 514) away from the first strip (46) toward the second strip (48).

11. The strip seal (14, 314, 414, 514) of claim 10, wherein the flow guide (54, 454, 554) includes a guide sheet (60, 460, 560) and a first cooling passage (62) formed in the guide sheet (60, 460, 560), the guide sheet (60, 460, 560) includes an outer surface (64, 264, 364, 564) and an inner surface (66, 366, 566) spaced apart from the outer surface (64, 264, 364, 564), the outer surface (64, 264, 364, 564) is formed to include an inlet aperture (72, 272, 572) arranged to open into the first cooling passage (62), the inner surface (66, 366, 566) is formed to include an outlet aperture (74, 274, 574) arranged to open into the first cooling passage (62), and the inlet aperture (72, 272, 572) has a circular shape.

12. The strip seal (14, 314, 414, 514) of claim 11, wherein the strip seal (14, 314, 414, 514) has a longitudinal axis (40, 240) located about midway between the first and second strips (46, 48), the inlet aperture (72, 272, 572) includes an inlet center point (78), and the inlet center point (78) is spaced apart from the longitudinal axis (40, 240) or lies on the longitudinal axis (40, 240) and/or wherein the outlet aperture (74, 274, 574) includes an outlet center point and the outlet center point is spaced apart from the longitudinal axis (40, 240).

13. The strip seal (14, 314, 414, 514) of one of the claims 10 to 12, wherein the flow guide (54, 454, 554) includes a guide sheet (60, 460, 560) and a first cooling passage (62) formed in the guide sheet (60, 460, 560), the guide sheet (60, 460, 560) includes an inlet aperture (72, 272, 572) that opens into the first cooling passage (62), and the inlet aperture (72, 272, 572) is oval shaped or rectangle shaped.

14. The strip seal (14, 314, 414, 514) of one of the claims 10 to 13, wherein the second flow of fluid includes a first portion of air and a second portion of air, the flow guide (54, 454, 554) includes a guide sheet (60, 460, 560) formed to include a first cooling passage (62) and a second cooling passage, the first cooling passage (62) is arranged to direct the first portion of air through the seal strip toward the second strip (48), the second cooling passage is spaced apart from the first cooling passage (62) and arranged to direct the second portion of air through the strip seal (14, 314, 414, 514) toward the first strip (46).

15. The strip seal (14, 314, 414, 514) of claim 14, wherein the guide sheet (60, 460, 560) includes an outer surface (64, 264, 364, 564) formed to include a second inlet aperture (72, 272, 572) that opens into the second cooling passage and an inner surface (66, 366, 566) formed to include a second outlet aperture (74, 274, 574) that opens into the second cooling passage, and the second inlet aperture (72, 272, 572) has a circular shape, wherein the strip seal (14, 314, 414, 514) has a longitudinal axis (40, 240) located about midway between the first and second strips (46, 48), the outer surface (64, 264, 364, 564) is formed to further include a first inlet aperture (72, 272, 572) that opens into the first cooling passage (62), and the first inlet aperture (72, 272, 572) is spaced apart axially from the second inlet aperture (72, 272, 572) relative to the longitudinal axis (40, 240).

## Patentansprüche

1. Mantelring (10) für eine Verwendung in einer Turbine eines Gasturbinenmotors (100), wobei der Mantelring (10) umfasst
ein erstes Mantelsegment (12A),
ein zweites Mantelsegment (12B), das von dem ersten Mantelsegment (12A) umlaufend beabstandet ist, um dazwischen einen Spalt (18) zu bilden, und
ein Dichtungsband (14, 314, 414, 514), das sich quer zu dem Spalt (18) erstreckt und für ein Blockieren eines ersten Stroms eines Fluids durch den Spalt (18) eingerichtet ist, und das eine Stromführung (54, 454, 554) aufweist, die für ein Lenken eines zweiten Stroms eines Fluids durch den Spalt (18) weg von dem ersten Mantelsegment (12A) hin zu dem zweiten Mantelsegment (12B) eingerichtet ist.

2. Mantelring (10) nach Anspruch 1, wobei das Dichtungsband (14, 314, 414, 514) ein erstes Band (46) aufweist, das in einer ersten Dichtungsnut (32A) aufgenommen ist, die in dem ersten Mantelsegment (12A) gebildet ist, wobei ein zweites Band (48) in einer zweiten Dichtungsnut (32B) aufgenommen ist, die in dem zweiten Mantelsegment (12B) gebildet ist, und ein Strom-Steuerungsband (50), das sich zwischen dem ersten und zweiten Band (46, 48) erstreckt und miteinander verbindet.

3. Mantelring (10) nach Anspruch 2, wobei das Strom-Steuerungsband (50) eine Stromsperre (52) aufweist, die für ein Blockieren des ersten Stroms eines Fluids durch den Spalt (18) eingerichtet ist, und die Stromführung (54, 454, 554), die für ein Lenken des zweiten Stroms eines Fluids durch den Spalt (18) und hin zu dem zweiten Mantelsegment (12B) eingerichtet ist.

4. Mantelring (10) nach Anspruch 3, wobei die Stromführung (54, 454, 554) ein Führungsblech (60, 460, 560) und einen ersten Kühldurchgang (62) aufweist, der in dem Führungsblech (60, 460, 560) ausgeformt ist, wobei der erste Kühldurchgang (62) für ein sich Erstrecken durch das Führungsblech (60, 460, 560) eingerichtet ist, wobei das Führungsblech (60, 460, 560) aufweist eine äußere Oberfläche (64, 264, 364, 564), eine innere Oberfläche (66, 36, 566), die von der äußeren Oberfläche (64, 264, 364, 564) radial beabstandet ist, und eine Durchgangsseitenwand (68, 586), die sich zwischen der äußeren und inneren Oberfläche (64, 264, 364, 564; 66, 36, 566) erstreckt und miteinander verbindet, um den ersten Kühldurchgang (62) zu definieren.

5. Mantelring (10) nach Anspruch 4, wobei die
Durchgangsseitenwand (68, 568) und die innere Oberfläche (66, 36, 566) einen Winkel α dazwischen definieren und der Winkel α kleiner als 90 Grad ist.

6. Mantelring (10) nach Anspruch 4 oder 5, wobei die äußere Oberfläche (64, 264, 364, 564) so gebildet ist, dass eine Einlassöffnung (72, 272, 572) umfasst wird, die für ein Münden in den ersten Kühldurchgang (62) eingerichtet ist, wobei die innere Oberfläche (66, 366, 566) so gebildet ist, dass eine Auslassöffnung (74, 274, 574) umfasst wird, die für ein Münden in den ersten Kühldurchgang (62) eingerichtet ist, und wobei die Einlassöffnung (72, 272, 572) eine kreisrunde Form hat, wenn aus einer radial äußeren Position der äußeren Oberfläche (64, 264, 364, 564) aus betrachtet in Richtung einer Mittelachse (20) des Mantelrings (10) geschaut wird.

7. Mantelring (10) nach Anspruch 6, wobei das Dichtungsband (14, 314, 414, 514) eine Längsachse (40, 240) hat, die ungefähr auf halber Strecke zwischen dem ersten und zweiten Band (46, 48) liegt, wobei die Einlassöffnung (72, 272, 572) einen Einlassmittelpunkt (78) aufweist, und der Einlassmittelpunkt (78) auf der Längsachse (40, 240) liegt.

8. Mantelring (10) nach Anspruch 7, wobei die Auslassöffnung (74, 274, 574) eine kreisrunde Form hat, wenn aus einer radial inneren Position der inneren Oberfläche (66, 366, 566) aus betrachtet in Richtung der Mittelachse (20) geschaut wird, wobei die Auslassöffnung (74, 274, 574) einen Auslassmittelpunkt aufweist und der Auslassmittelpunkt von der Längsachse (40, 240) beabstandet ist.

9. Mantelring (10) nach einem der Ansprüche 3 bis 8, wobei die Stromführung (54, 454, 554) ein Führungsblech (60, 460, 560) und eine erste Kühldurchführung (62) aufweist, die in dem Führungsblech (60, 460, 560) ausgeformt ist, wobei der Kühldurchgang (62) für ein sich Erstrecken durch das Führungsblech (60, 460, 560) eingerichtet ist, wobei das Führungsblech (60, 460, 560) eine Vorderseitenwand (468F) und eine Rückseitenwand (468R) umfasst, die von der Vorderseitenwand (468F) beabstandet ist, und wobei das erste Mantelsegment (12A), das zweite Mantelsegment (12B), die Vorderseitenwand (468F) und die Rückseitenwand (468R) zusammenwirken, um den ersten Kühldurchgang (62) zu definieren.

10. Dichtungsband (14, 314, 414, 514) zur Verwendung in einem Mantelring (10) einer Turbine, wobei das Dichtungsband (14, 314, 414, 514) umfasst
ein erstes Band (46),
ein zweites Band (48), das von dem ersten Band (46) beabstandet ist, und ein Strom-Steuerband (50), das sich zwischen dem ersten und zweiten Band (46, 48) erstreckt und miteinander verbindet, wobei das Strom-Steuerband (50) eine Stromsperre (52) für ein Blockieren eines ersten Stroms eines Fluids durch das Dichtungsband (14, 314, 414, 514) und eine Stromführung (54, 454, 554) aufweist, die dazu eingerichtet ist, es einem zweiten Strom eines Fluids zu erlauben, durch das Dichtungsband (14, 314, 414, 514) weg von dem ersten Band (46) hin zu dem zweiten Band (48) zu gelangen.

11. Dichtungsband (14, 314, 414, 514) nach Anspruch 10, wobei die Stromführung (54, 454, 554) ein Führungsblech (60, 460, 560) und einen ersten Kühldurchgang (62) aufweist, der in dem Führungsblech (60, 460, 560) ausgeformt ist, wobei das Führungsblech (60, 460, 560) aufweist eine äußere Oberfläche (64, 264, 364, 564) und eine innere Oberfläche (66, 36, 566), die von der äußeren Oberfläche (64, 264, 364, 564) beabstandet ist, wobei die äußere Oberfläche (64, 264, 364, 564) so gebildet ist, dass eine Einlassöffnung (72, 272, 572) umfasst wird, die für ein Münden in den ersten Kühldurchgang (62) eingerichtet ist, wobei die innere Oberfläche (66, 366, 566) so gebildet ist, dass eine Auslassöffnung (74, 274, 574) umfasst wird, die für ein Münden in den ersten Kühldurchgang (62) eingerichtet ist, und wobei die Einlassöffnung (72, 272, 572) eine kreisrunde Form hat.

12. Dichtungsband (14, 314, 414, 514) nach Anspruch 11, wobei das Dichtungsband (14, 314, 414, 514) eine Längsachse (40, 240) hat, die ungefähr auf halber Strecke zwischen dem ersten und zweiten Band (46, 48) liegt, wobei die Einlassöffnung (72, 272, 572) einen Einlassmittelpunkt (78) aufweist, und der Einlassmittelpunkt (78) von der Längsachse (40, 240) beabstandet ist oder auf der Längsachse (40, 240) liegt und/oder wobei die Auslassöffnung (74, 274, 574) einen Auslassmittelpunkt aufweist und der Auslassmittelpunkt von der Längsachse (40, 240) beabstandet ist.

13. Dichtungsband (14, 314, 414, 514) nach einem der Ansprüche 10 bis 12, wobei die Stromführung (54, 454, 554) ein Führungsblech (60, 460, 560) und einen ersten Kühldurchgang (62) aufweist, der in dem Führungsblech (60, 460, 560) ausgebildet ist, wobei das Führungsblech (60, 460, 560) eine Einlassöffnung (72, 272, 572) aufweist, die in dem ersten Kühldurchgang (62) mündet, und die Einlassöffnung (72, 272, 572) eine oval geformt oder rechteckig geformt ist.

14. Dichtungsband (14, 314, 414, 514) nach einem der Ansprüche 10 bis 13, wobei der zweite Strom eines Fluids einen ersten Teil von Luft und einen zweiten Teil von Luft umfasst, die Stromführung (54, 454, 554) ein Führungsblech (60, 460, 560) aufweist, das für ein Umfassen eines ersten Kühldurchgangs (62) und eines zweiten Kühldurchgangs gebildet ist, der erste Kühldurchgang (62) für ein Lenken des ersten Teils von Luft durch das Dichtungsband hin zu dem zweiten Band (48) eingerichtet ist, der zweite Kühldurchgang von dem ersten Kühldurchgang (62) beabstandet ist und für ein Lenken des zweiten Teils von Luft durch das Dichtungsband (14, 314, 414, 514) hin zu dem ersten Band (46) eingerichtet ist.

15. Dichtungsband (14, 314, 414, 514) nach Anspruch 14, wobei das Führungsblech (60, 460, 560) eine äußere Oberfläche (64, 264, 364, 564) aufweist, die so gebildet ist, dass eine zweite Einlassöffnung (72, 272, 572) umfasst wird, die für ein Münden in den zweiten Kühldurchgang eingerichtet ist, und die innere Oberfläche (66, 366, 566) so gebildet ist, dass eine zweite Auslassöffnung (74, 274, 574) umfasst wird, die für ein Münden in den zweiten Kühldurchgang (62) eingerichtet ist, und wobei die zweite Einlassöffnung (72, 272, 572) eine kreisrunde Form hat, wobei das Dichtungsband (14, 314, 414, 514) eine Längsachse (40, 240) hat, die ungefähr auf halber Strecke zwischen dem ersten und zweiten Band (46, 48) liegt, wobei die äußere Oberfläche (64, 264, 364, 564) so geformt ist, dass ferner eine erste Einlassöffnung (72, 272, 572) umfasst ist, die in der ersten Kühldurchführung (62) mündet, und wobei die erste Einlassöffnung (72, 272, 572) axial von der zweiten Einlassöffnung (72, 272, 572) relativ zu der Längsachse (40, 240) beabstandet ist.

## Revendications

1. Virole (10) destinée à l'utilisation dans une turbine d'un moteur à turbine à gaz (100), la virole (10) comprenant
un premier segment de virole (12A),
un deuxième segment de virole (12B) espacé de manière circonférentielle du premier segment de virole (12A) pour former une fente (18) entre ceux-ci, et un joint-bande (14, 314, 414, 514), qui s'étend à travers la fente (18) et est disposé pour bloquer un premier flux de fluide à travers la fente (18) et qui comprend un guidage de flux (54, 454, 554) disposé pour diriger un deuxième flux de fluide à travers la fente (18) de sorte qu'il s'éloigne du premier segment de virole (12A) et s'approche du deuxième segment de virole (12B).

2. Virole (10) selon la revendication 1, dans lequel le joint-bande (14, 314, 414, 514) comprend une première bande (46) reçue dans une première fente de joint (32A) formée dans le premier segment de virole (12A), une deuxième bande (48) reçue dans une deuxième fente de joint (32B) formée dans le deuxième segment de virole (12B) et une bande de contrôle de flux (50), qui s'étend entre et relie la première et la deuxième bande (46, 48) l'une à l'autre.

3. Virole (10) selon la revendication 2, dans lequel la bande de contrôle de flux (50) comprend un bloqueur de flux (52) disposé pour bloquer le premier flux de fluide à travers la fente (18) et le guidage de flux (54, 454, 554) disposé pour diriger le deuxième flux de fluide à travers la fente (18) et vers le deuxième segment de virole (12B).

4. Virole (10) selon la revendication 3, dans lequel le guidage de flux (54, 454, 554) comprend une feuille de guidage (60, 460, 560) et un premier passage de refroidissement (62) formé dans la feuille de guidage (60, 460, 560), le premier passage de refroidissement (62) étant disposé de sorte qu'il s'étend à travers la feuille de guidage (60, 460, 560), la feuille de guidage (60, 460, 560) comprenant une surface extérieure (64, 264, 364, 564), une surface intérieure (66, 366, 566) radialement espacée de la surface extérieure (64, 264, 364, 564) et une paroi latérale de passage (68, 568), qui s'étend entre et relie la surface extérieure (64, 264, 364, 564) à la surface intérieure (66, 366, 566) pour définir le premier passage de refroidissement (62).

5. Virole (10) selon la revendication 4, dans lequel la paroi latérale de passage (68, 568) et la surface intérieure (66, 366, 566) définissent un angle α entre elles et l'angle α est inférieur à 90 degrés.

6. Virole (10) selon la revendication 4 ou la revendication 5, dans lequel la surface extérieure (64, 264, 364, 564) est formée de sorte qu'elle comprend une ouverture d'entrée (72, 272, 572) disposée de telle manière qu'elle s'ouvre dans le premier passage de refroidissement (62), la surface intérieure (66, 366, 566) étant formée de sorte qu'elle comprend une ouverture de sortie (74, 274, 574) disposée de telle manière qu'elle s'ouvre dans le premier passage de refroidissement (62), et l'ouverture d'entrée (72, 272, 572) ayant une forme circulaire, si on regarde à partir d'une position radialement extérieure de la surface extérieure (64, 264, 364, 564) vers un axe central (20) de la virole (10).

7. Virole (10) selon la revendication 6, dans lequel le joint-bande (14, 314, 414, 514) a un axe longitudinal (40, 240) situé à mi-chemin entre la première et la deuxième bande (46, 48), l'ouverture d'entrée (72, 272, 572) comprenant un point central d'entrée (78) et le point central d'entrée (78) se trouvant sur l'axe longitudinal (40, 240).

8. Virole (10) selon la revendication 7, dans lequel l'ouverture de sortie (74, 274, 574) comprend une forme circulaire, si on regarde à partir d'une position radialement intérieure de la surface intérieure (66, 366, 566) vers l'axe central (20), l'ouverture de sortie (74, 274, 574) comprenant un point central de sortie et le point central de sortie étant espacé de l'axe longitudinal (40, 240).

9. Virole (10) selon l'une des revendications 3 à 8, dans lequel le guidage de flux (54, 454, 554) comprend une feuille de guidage (60, 460, 560) et une premier passage de refroidissement (62) formé dans la feuille de guidage (60, 460, 560), le premier passage de refroidissement (62) étant disposé de sorte qu'il s'étend à travers la feuille de guidage (60, 460, 560), la feuille de guidage (60, 460, 560) comprenant une paroi latérale avant (468F) et une paroi latérale arrière (468R) espacée de la paroi latérale avant (468F), et le premier segment de virole (12A), le deuxième segment de virole (12B), la paroi latérale avant (468F) et la paroi latérale arrière (468R) coopérant pour définir le premier passage de refroidissement (62).

10. Joint-bande (14, 314, 414, 514) destiné à l'utilisation dans une virole (10) d'une turbine, le joint-bande (14, 314, 414, 514) comprenant :
une première bande (46),
une deuxième bande (48) espacée de la première bande (46), et
une bande de contrôle de flux (50), qui s'étend entre et relie la première et la deuxième bande (46, 48) l'une à l'autre, la bande de contrôle de flux (50) comprenant un bloqueur de flux (52) disposé pour bloquer un premier flux de fluide à travers le joint-bande (14, 314, 414, 514) et un guidage de flux (54, 454, 554) disposé pour permettre à un deuxième flux de fluide de passer à travers le joint-bande (14, 314, 414, 514) de sorte qu'il s'éloigne de la première bande (46) et s'approche de la deuxième bande (48).

11. Joint-bande (14, 314, 414, 514) selon la revendication 10, dans lequel le guidage de flux (54, 454, 554) comprend une feuille de guidage (60, 460, 560) et un premier passage de refroidissement (62) formé dans la feuille de guidage (60, 460, 560), la feuille de guidage (60, 460, 560) comprenant une surface extérieure (64, 264, 364, 564) et une surface intérieure (66, 366, 566) espacée de la surface extérieure (64, 264, 364, 564), la surface extérieure (64, 264, 364, 564) étant formée de sorte qu'elle comprend une ouverture d'entrée (72, 272, 572) disposée de telle manière qu'elle s'ouvre dans le premier passage de refroidissement (62), la surface intérieure (66, 366, 566) étant formée de sorte qu'elle comprend une ouverture de sortie (74, 274, 574) disposée de telle manière qu'elle s'ouvre dans le premier passage de refroidissement (62), et l'ouverture d'entrée (72, 272, 572) ayant une forme circulaire.

12. Joint-bande (14, 314, 414, 514) selon la revendication 11, dans lequel le joint-bande (14, 314, 414, 514) a un axe longitudinal (40, 240) situé à mi-chemin entre la première et la deuxième bande (46, 48), l'ouverture d'entrée (72, 272, 572) comprenant un point central d'entrée (78) et le point central d'entrée (78) étant espacé de l'axe longitudinal (40, 240) ou se trouvant sur l'axe longitudinal (40, 240) et/ou l'ouverture de sortie (74, 274, 574) comprenant un point central de sortie et le point central de sortie étant espacé de l'axe longitudinal (40, 240).

13. Joint-bande (14, 314, 414, 514) selon l'une des revendications 10 à 12, dans lequel le guidage de flux (54, 454, 554) comprend une feuille de guidage (60, 460, 560) et un premier passage de refroidissement (62) formé dans la feuille de guidage (60, 460, 560), la feuille de guidage (60, 460, 560) comprenant une ouverture d'entrée (72, 272, 572), qui s'ouvre dans le premier passage de refroidissement (62), et l'ouverture d'entrée (72, 272, 572) ayant une forme ovale ou une forme rectangulaire.

14. Joint-bande (14, 314, 414, 514) selon l'une des revendications 10 à 13, dans lequel le deuxième flux de fluide comprend une première portion d'air et une deuxième portion d'air, le guidage de flux (54, 454, 554) comprenant une feuille de guidage (60, 460, 560) formée de sorte qu'elle comprend un premier passage de refroidissement (62) et un deuxième passage de refroidissement, le premier passage de refroidissement (62) étant disposé pour diriger la première portion d'air à travers le joint-bande vers la deuxième bande (48), le deuxième passage de refroidissement étant espacé du premier passage de refroidissement (62) et disposé pour diriger la deuxième portion d'air à travers le joint-bande (14, 314, 414, 514) vers la première bande (46).

15. Joint-bande (14, 314, 414, 514) selon la revendication 14, dans lequel la feuille de guidage (60, 460, 560) comprend une surface extérieure (64, 264, 364, 564) formée de sorte qu'elle comprend une deuxième ouverture d'entrée (72, 272, 572), qui s'ouvre dans le deuxième passage de refroidissement, et une surface intérieure (66, 366, 566) formée de sorte qu'elle comprend une deuxième ouverture de sortie (74, 274, 574), qui s'ouvre dans le deuxième passage de refroidissement, et la deuxième ouverture d'entrée (72, 272, 572) ayant une forme circulaire, le joint-bande (14, 314, 414, 514) ayant un axe longitudinal (40, 240) situé à mi-chemin entre la première et la deuxième bande (46, 48), la surface extérieure (64, 264, 364, 564) étant formée de sorte qu'elle comprend en outre une première ouverture d'entrée (72, 272, 572), qui s'ouvre dans le premier passage de refroidissement (62), et la première ouverture d'entrée (72, 272, 572) étant espacée axialement de la deuxième ouverture d'entrée (72, 272, 572) par rapport à l'axe longitudinal (40,240).
